# EUROPÄISCHE PATENTSCHRIFT

(11) **EP 1 564 409 B1**
(45) Veröffentlichungstag und Bekanntmachung des Hinweises auf die Patenterteilung: **29.05.2013**
(21) Anmeldenummer: 04106502.0
(22) Anmeldetag: 13.12.2004
(51) Int. Cl.: F04B 49/06, B60T 17/02, H02P 7/00, H02P 7/29

(54) **Pumpenregelung**
Pump control
Commande de pompe

(30) Priorität: 12.02.2004 DE 102004007154
(43) Veröffentlichungstag der Anmeldung: 17.08.2005
(73) Patentinhaber: ROBERT BOSCH GMBH, 70442 Stuttgart (DE)
(72) Erfinder: Rothfuss, Ralf, 73119, Zell (DE); Fehn, Achim, 70176, Stuttgart (DE); Wimmer, Markus, 74395, Mundelsheim (DE)

(56) Entgegenhaltungen:
- EP-A1- 0 270 474
- WO-A1-94/07717
- WO-A1-95/09305
- WO-A2-00/02753
- DE-A1- 19 914 404
- DE-A1- 19 953 627
- US-A- 4 330 238

## Beschreibung

### Stand der Technik

Die Erfindung geht aus von einem Verfahren bzw. einer Vorrichtung zum Betrieb einer Pumpe, insbesondere einer Pumpe in der Bremsanlage eines Fahrzeugs, mit einer Steuerung und einer Regelung gemäß den unabhängigen Ansprüche 1 und 7.

Für den aktiven Druckaufbau bzw. Druckabbau eines Mediums können unterschiedliche Pumpenansteuerungssysteme eingesetzt werden. Eine Möglichkeit, einen vorgegebenen Druck zu erreichen, besteht dabei darin, die Förderleistung der Pumpe mittels einer Variation der Drehzahl zu regeln. Dabei kann die Drehzahl beispielsweise über die Änderung einer getakteten Ansteuerung der Pumpe variiert werden. Ein Verfahren bzw. eine Vorrichtung, die eine derartige Ansteuerung bei einer Rückförderpumpe in einer Bremsanlage zeigt, ist in der WO 94/07717 A1 beschrieben, welche als nächstkommender Stand der Technik angesehen werden kann. Dabei wird eine (Nachlauf-)Generatorspannung, welche durch den Pumpenmotor während der Pulspausen erzeugt wird, zur Herleitung der Pumpendrehzahl verwendet. Anschließend wird in einem Regelkreis der Pumpendrehzahl-Sollwert mit dem - Istwert vergleichen. Aus der Differenz wird darauf ein pulsbreitenmoduliertes Signal gewonnen, welches als neue Stellgröße für die Pumpenansteuerung dient.

Aus der DE 199 14 404 A1 ist ein Verfahren bzw. eine Vorrichtung bekannt, bei der unterschiedliche Puls-Pulspausenverhältnisse zur Ansteuerung einer Pumpe in einer Bremsanlage eines Kraftfahrzeugs verwendet werden. Dabei wird ausgehend von einer ungetakteten Ansteuerung zu Beginn der Pumpenmotorsteuerung ein anfängliches Puls-Pulspausenverhältnis in Abhängigkeit von der Bordspannung gewählt, wohingegen das weitere Puls-Pulspausenverhältnis von einer Nachlaufspannung des Pumpenmotors variierbar ist. Die Nachlaufspannung des Pumpenmotors in der ungetakteten Pulspause wird dabei ganz allgemein dazu genutzt, die Drehzahl der Pumpe zu bestimmen.

Eine konkrete Ausgestaltung der Erfassung der Nachlaufspannung und somit der Drehzahl eines Motors ist in der nicht vorveröffentlichten Schrift DE 103 45 868 A1 beschrieben. Dabei wird mittels eines geeigneten Schaltmittels die Erfassung der Pumpendrehzahl nach einem Einschwingvorgang der Nachlaufspannung ermöglicht.

Die Offenlegungsschrift DE 19953627 A1 offenbart ein Verfahren bei dem die Drehzahl eines, Pumpenmotors eines Fahrzeug-Bremssteuersystems durch Vergleichen einer tatsächlichen Pumpenmotordrehzahl mit einem Drehzahlgrenzwert geregelt wird Die tatsächliche Pumpenmotordrehzahl wird durch Messen der gegenelektromotorischen Kraft des Pumpenmotors bestimmt, wobei der Motor nicht mit Energie versorgt wird. Wenn die tatsächliche Pumpenmotordrehzahl größer als der Drehzahlgrenzwert ist, bleibt der Motor in einem Zustand, in dem keine Energie zugeführt wird. Wenn die tatsächliche Pumpenmotordrehzahl geringer als der Drehzahlgrenzwert ist, wird der Pumpenmotor durch eine pulsbreitenmodulierte Spannung mit einem variablen Arbeitszyklus und einer variablen Frequenz mit Energie versorgt, welche Funktionen der Differenz zwischen der tatsächlichen Pumpenmotordrehzahl und dem Drehzahlgrenzwert sind.

Die Offenlegungsschrift WO 00/02753 offenbart ein Verfahren zur Bremsdruckeinstellung in einer mit einer elektrischen Hydraulikpumpe versehenen Fahrzeug-Bremsanlage welches folgende Schritte umfasst: Ermitteln eines herrschenden Bremsdruckes oder Bestimmen eines Solldruckes, und graduelles Ansteuern der Pumpe nach Maßgabe des ermittelten Bremsdruckes oder des Solldruckes. Bei einem Verfahren zum Öffnen eines Einlaßventils einer hydraulischen Fahrzeug-Bremsanlage wird ein Druckanstieg an der Einlaßseite des Einlaßventils erzeugt, wenn die Differenz zwischen dem auslaßseitigen und dem einlaßseitigen Druck am Einlaßventil einen positiven Schwellenwert überschreitet.

Die Offenlegungsschrift WO 95/09305 offenbart ein Pumpensysten, welches eine Last Kompensation aufweist. Eine variable Steuerung der Motorgeschwindigkeit gewährleistet eine Reduzierung der Flussgeschwindigkeit. Bei Überschreiten eines Grenzwerts der Last des Pumpenmotors erhöht die Steuerung der Motorgeschwindigkeit die Geschwindigkeit des Motors.

### Vorteile der Erfmdung

Die vorliegende Erfindung beschreibt ein Verfahren bzw. eine Vorrichtung zum Betrieb einer Pumpe mit einer Steuerung und einer Regelung. Dabei ist insbesondere vorgesehen, dass die Pumpe in einem Fahrzeug untergebracht ist, beispielsweise als Ölpumpe oder als hydraulische Pumpe in einer Bremsanlage. Zur Steuerung der Pumpe ist in einem ersten Schritt die Bildung von ersten Steuerparametern in Abhängigkeit von einem vorgebbaren Solldrehzahlverlauf vorgesehen. In einem zweiten Schritt erfasst die Regelung die aktuelle Drehzahl der Pumpe und vergleicht die so erfasste Drehzahl mit dem vorgegebenen Solldrehzahlverlauf. Erfindungsgemäß werden dann in einem weiteren Schritt in Abhängigkeit vom durchgeführten Vergleich zusätzliche zweite Steuerparameter erzeugt, die den ersten Steuerparametern überlagert werden. Vorzugsweise geschieht diese Überlagerung während des Betriebs der Pumpe und somit gleichzeitig mit der Ansteuerung der Pumpe durch die Steuerung.

Erfindungsgemäß ist vorgesehen, dass die ersten Steuerparameter vor der Ansteuerung der Pumpe gebildet werden. Dabei ist insbesondere vorgesehen, dass die ersten Steuerparameter für den gesamten Betrieb aufgrund einer Bedarfsanfrage an die Pumpe gebildet werden, wobei die Bildung der ersten Steuerparameter durch die Bedarfsanfrage gestartet wird.

Durch die so beschriebene Erfindung können vorteilhafterweise beliebige Solldruckverläufe realisiert werden. Darüber hinaus ist eine Erweiterung der Einsatzmöglichkeiten der Pumpe möglich. Besonders vorteilhaft ist die einfache Implementierbarkeit der Regelung, wodurch die Zuverlässigkeit der Pumpe gesteigert werden kann. Weiterhin ist die Erfindung für beliebige Elektromotoren als Pumpenantrieb einsetzbar. Vorteilhafterweise kann die Pumpe auch bei einem Reglerausfall über die Steuerung weiter betrieben werden.

In einer Ausgestaltung der Erfmdung ist vorgesehen, dass bei der Bildung der ersten Steuerparameter zusätzlich der Lastverlauf der Pumpe berücksichtigt wird. Dabei ist insbesondere vorgesehen, dass der Lastverlauf durch die Konstruktionsparameter d.h. die physikalischen Eigenschaften der Pumpe, der Stoffeigenschaften des gepumpten Mediums und/oder der an der Pumpe anliegenden Drücke ermittelbar ist. Dadurch kann vorteilhafterweise das physikalische Verhalten der Pumpe während des Betriebs bei der Bildung der ersten Steuerparameter berücksichtigt werden.

Eine besondere Ausgestaltung der Erfindung sieht vor, dass der Sollvolumenstrom bzw. der Solldrehzahlverlauf der Pumpe in Abhängigkeit einer Bedarfsanfrage vorgebbar ist. Dabei kann weiterhin vorgesehen sein, dass die Bedarfsanfrage infolge einer Bremsanforderung durch den Fahrer und/oder eines automatischen Fahrzeugssystems erfolgt. So kann mit der Bremsanforderung der Beginn des Druckaufbaus durch die Pumpe, aber auch die Höhe des erzeugten Drucks bzw. Druckunterschieds vorgebbar sein. Typische automatische Fahrzeugssysteme, die aufgrund von äußeren Parametern selbsttätig Brems- und somit Pumpenanforderungen generieren, sind beispielsweise das Antiblockiersystem ABS, das elektronische Stabilitätsprogramm ESP oder ganz allgemein Fahrstabilitätssysteme.

Vorteilhafterweise beschreiben die ersten Steuerparameter das zeitliche Verhalten der an die Pumpe angelegten Spannung. Dabei kann insbesondere vorgesehen sein, dass in einem ersten Schritt eine mittlere Spannung bestimmt wird, die an die Pumpe anzulegen ist, um den erforderlichen Sollvolumenstrom bzw. die erforderliche Solldrehzahl zu erreichen. In einem weiteren Schritt kann daran anschließend eine getaktete Ansteuerung mit entsprechenden Steuerparametern bestimmt werden, mittels der im Zeitverlauf eine mittlere Spannung an die Pumpe angelegt bzw. die erforderliche Solldrehzahl erzeugt werden kann.

In einer besonderen Ausgestaltung der Erfindung ist vorgesehen, dass die aktuelle Drehzahl der Pumpe durch einen Drehzahlsensor erfasst wird. Alternativ kann jedoch auch vorgesehen sein, die aktuelle Drehzahl in Abhängigkeit von der erfassten Nachlaufspannung an der Pumpe zu bestimmen. Dabei ist insbesondere vorgesehen, die Nachlaufspannung innerhalb einer ungetakteten Pulspause einer getakteten Ansteuerung der Pumpe zu erfassen.

Vorteilhafterweise erkennt die Regelung eine Abweichung des insbesondere zeitlichen aktuellen Drehzahlverlaufs vom Solldrehzahlverlauf. Dabei ist vorgesehen, dass die Regelung in Abhängigkeit von einer erkannten Abweichung zweite Steuerparameter zur Modifikation des aktuellen Drehzahlverlaufs bildet. Diese zweiten Steuerparameter sind dabei dazu geeignet, den aktuellen Drehzahlverlauf an den Solldrehzahlverlauf anzugleichen.

Weitere Vorteile ergeben sich aus der nachfolgenden Beschreibung von Ausführungsbeispielen bzw. aus den abhängigen Patentansprüchen.

### Zeichnungen

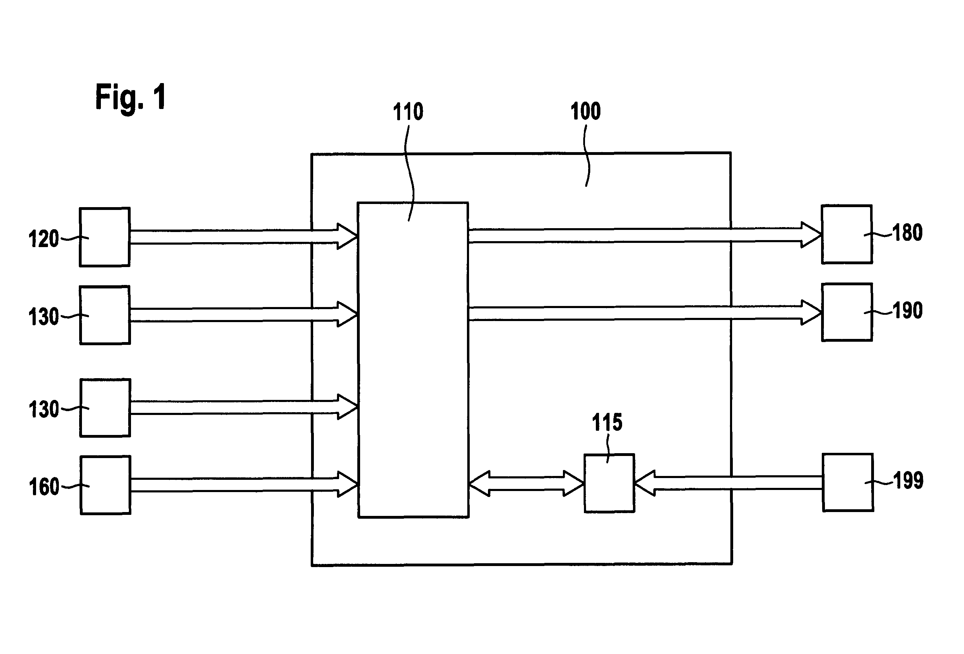

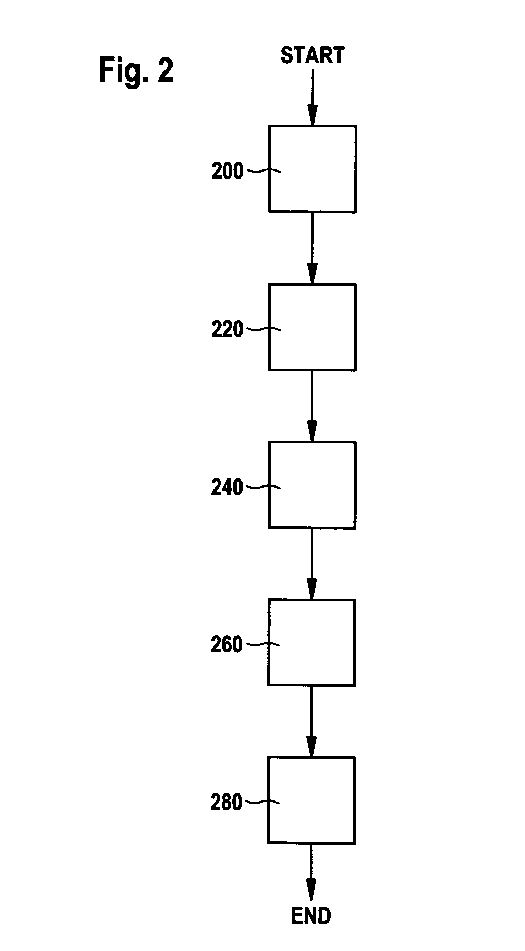

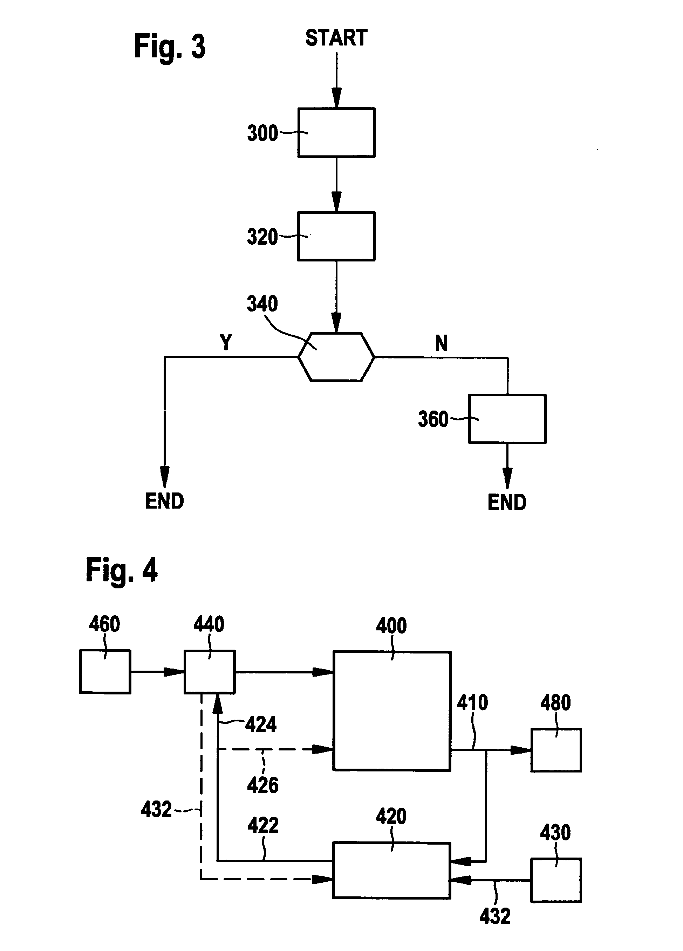

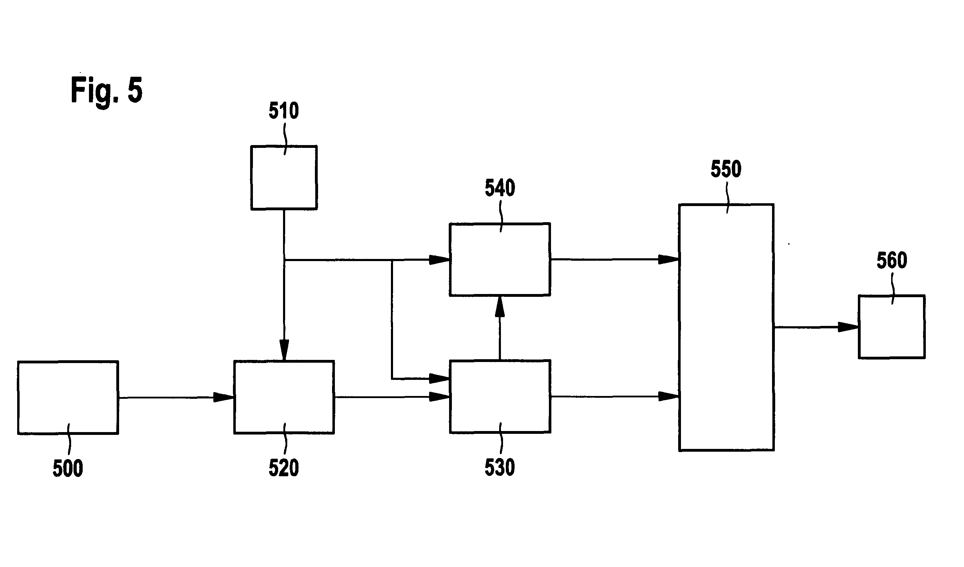

Figur 1 zeigt schematisch ein Blockschaltbild, welches die Steuerung bzw. Regelung einer Pumpe beschreibt. In der Figur 2 ist ein Flussdiagramm zur Ermittlung von Steuersignalen für die Pumpe dargestellt. Die Regelung bei auftretender Abweichung des Ist-Drehzahlverlaufs vom Soll-Drehzahlverlauf beschreibt das Flussdiagramm in Figur 3. Eine mögliche Anordnung der Steuerung und der Regelung hinsichtlich der Pumpe ist in Figur 4 gezeigt. Figur 5 zeigt eine alternative Beschreibung der Herleitung der Steuersignale für die Pumpe.

### Ausführungsbeispiel

In vorliegenden Ausführungsbeispiel ist die Pumpe, die mit dem erfindungsgemäßen Verfahren bzw. der erfindungsgemäßen Vorrichtung betrieben wird, in einem hydraulischen und/oder pneumatischen Bremssystems eines Kraftfahrzeug vorgesehen. Dabei weist das Fahrzeug wenigstens ein System 120 auf, welches eine Bremsanforderung an eine Prozesseinheit 110 abgeben kann. Unter ein Bremsanforderung kann dabei sowohl der Start eines Bremsvorgangs des Fahrzeugs als auch eine Vorgabe der Druckerhöhung oder Druckerniedrigung in einem Speicher bzw. an wenigsten einer Radbremse verstanden werden. Typischerweise erfolgen derartige Bremsanforderungen durch den Fahrer, indem dieser das Bremspedal betätigt und/oder durch automatische Bremssysteme wie ABS, ESP oder ASR. Ausgehend von einer Bremsanforderung werden in der Prozesseinheit 110 innerhalb einer Zentraleinheit 100 zur Erzeugung der Steuersignale für die Pumpe 180 verschiedene Parameter eingelesen, um eine effiziente Steuerung zu ermöglichen. So werden beispielsweise die Stoffeigenschaften des zu fördernden Mediums durch eine geeignete Vorrichtung 130 ermittelt und bei der Steuerung berücksichtigt. Denkbar ist hierbei, dass ein Ölzustandssensor das Hydrauliköl auf seine Temperatur bzw. Viskosität hin überwacht, da diese Parameter Einfluss auf die geforderte Pumpenleistung haben. Weiterhin können durch eine entsprechende Verteilung von Drucksensoren 150 im Pumpenkreislauf die an der Pumpe anliegenden Drücke erfasst werden. Darüber hinaus ist es zur Steuerung bzw. Regelung notwendig, die Drehzahl der Pumpe durch eine geeignete Vorrichtung 160 zu erfassen. Eine derartige Vorrichtung 160 kann beispielsweise durch einen Drehratensensor oder ein System zur Erfassung der drehzahlabhängigen Nachlaufspannung realisiert sein.

Neben der Prozesseinheit 110 kann in der zentralen Einheit 100 ein Speicher 115 vorgesehen, sein, der Konstruktionsparameter der Pumpe enthält. Diese Konstruktionsparameter lassen sich beispielsweise nach einem Austausch der Pumpe im Rahmen einer Reparatur durch einen externen Zugriff 199 aktualisieren.

Optional kann in einem besonderen Ausführungsbeispiel vorgesehen sein, dass die zentrale Einheit 100 neben der Steuerung bzw. Regelung der Pumpe 180 auch Ventile 190 im Bremssystem ansteuert.

Ein möglicher Algorithmus, der zur Bestimmung der Steuersignale der Pumpe 180 verwendet werden kann, ist im Flussdiagramm der Figur 2 abgebildet. Dabei wird nach dem Start des Algorithmus im Schritt 200 abgefragt, ob eine Bremsanforderung vorliegt. Alternativ hierzu kann jedoch auch vorgesehen sein, dass die Bremsanforderung die Initialisierung des Algorithmus in Figur 2 zur Bestimmung der Steuersignale, d.h. der ersten Steuerparameter der Pumpe 180 auslöst. Wie bereits geschildert, kann es sich bei den Bremsanforderung um eine Pedalbetätigung des Fahrer und/oder ein durch ein automatisches Bremssystem erzeugtes Signal zum Druckauf- oder -abbau in einem Druckspeicher oder wenigstens einer Radbremse handeln. Gängige Systeme, die derartige Bremsanforderungen in Abhängigkeit von der Fahrsituation des Fahrzeugs erzeugen sind dabei u.a. Antiblockiersysteme (ABS), Antriebsschlupfsysteme (ASR), elektronische Stabilitätsprogramme (ESP) oder sonstige Fahrdynamikregelungen (FDR). Über die Bremsanforderung lässt sich somit beispielsweise der erforderliche Druckaufbau ermitteln, der durch die Pumpe 180 beispielsweise in einem Druckspeicher aufgebaut werden soll. Zur Berechnung der dazu nötigen Steuersignale werden im nachfolgenden Schritt 220 verschiedene Parameter und Kenngrößen eingelesen. Konkret werden dabei die Konstruktionsparameter der Pumpe, Stoffeigenschaften des zu pumpenden Mediums, die an der Pumpe bzw. im Bremssystem herrschenden Druckverhältnisse und bei bereits sich im Betrieb befindlicher Pumpe, die Drehzahl der Pumpe bei der Berechnung berücksichtigt. Letztere Situation kann beispielsweise dadurch entstehen, dass eine weitere Bremsanforderung erfolgt, bevor der Druckaufbau der vorhergehenden Bremsanforderung durchgeführt wurde. Die konstruktiven Größen der Pumpe wie z.B. die Kolbenfläche, die Federrate oder die Kolbenpositionen, die für das Schließen bzw. Öffnen des Auslassventils notwendig sind, können dabei in dem Speicher 199 abgespeichert sein. Aus den so im Schritt 220 eingelesen Größen bzw. Parametern kann im folgenden Schritt 240 der Lastverlauf der Pumpe bzw. der Sollvolumenstrom, der Druckgradient und/oder der Solldruckverlauf des Pumpvorgangs bestimmt werden. Der Lastverlauf beschreibt dabei in Abhängigkeit der Konstruktionsparameter, der Stoffeigenschaften des Mediums und der an der Pumpe anliegenden Drücke den periodischen Verlauf des Lastmoments beim Antrieb der Pumpe. Der Sollvolumenstrom, der Druckgradient und/oder der Solldruckverlauf wird dagegen in Abhängigkeit von dem geforderten Druckaufbau bestimmt. Aus dem durch die Bremsanforderung vorgegebenen Druckgradienten lässt sich beispielsweise durch eine inverse mathematische Beschreibung des Hydrauliksystems ein Sollvolumenstrom bzw. ein Solldruckverlauf für die Pumpe herleiten. Dieser Sollvolumenstrom gibt den Mittelwert für das von der Pumpe zu fördernde Volumen an. Ist der Sollvolumenstrom bekannt, so lässt sich in Schritt 260 einfach auf den Solldrehzahlverlauf der Pumpe schließen. In Schritt 280 wird abschließend aus dem Solldrehzahlverlauf und dem Lastverlauf die Steuerung der Pumpe berechnet, indem ein Spannungszeitverlauf bestimmt wird. Typischerweise wird ein derartiger Spannungszeitverlauf durch eine getaktete Ansteuerung realisiert, bei der das Puls-Pulspausenverhältnisse die effektiv an der Pumpe anliegende Spannung und somit die Drehzahl der Pumpe charakterisiert. Der so erzeugte Spannungszeitverlauf stellt die ersten Steuerparameter zur Steuerung der Pumpe dar und kann gegebenenfalls im Speicher 199 abgelegt werden. Letzteres hat den Vorteil, dass Ermittlung der Steuerparameter und Ausführung der Steuerung durch unterschiedliche Einheiten realisiert werden können, um die Ausfallwahrscheinlichkeit zu minimieren. So könnte in einem besonderen Ausführungsbeispiel vorgesehen sein, dass die Steuerparameter zusammen mit den Bremsanforderungen abgespeichert werden, um eine unnötige redundante Berechnung der Steuerparametern bei gleichen Bremsanforderungen verhindern.

Neben der so skizzierten Ansteuerung der Pumpe wird eine Regelung überlagert, um eventuell auftretenden Störungen während des Betriebs der Pumpe zu berücksichtigen. Den Ablauf einer möglichen Regelung zeigt das Flussdiagramm in Figur 3. Nach dem Start des Algorithmus wird in Schritt 300 die Drehzahl der Pumpe erfasst. Das kann beispielsweise direkt über die Verwendung eines Drehzahlsensors an der Pumpe aber auch indirekt durch die Erfassung der Nachlaufspannung in den Pulspausen der getakteten Ansteuerung erfolgen. Wie bereits im eingangs genannten Stand der Technik aufgezeigt, kann aus der Nachlaufspannung eine Größe gewonnen werden, die proportional zur Drehzahl ist. Im nachfolgenden Schritt 320 wird die so erfasste Ist-Drehzahl der Pumpe mit der Soll-Drehzahl bzw. dem (zeitlichen) Solldrehzahlverlauf verglichen. Günstigerweise ist dabei vorgesehen, dass der Solldrehzahlverlauf ebenfalls im Speicher 199 abgespeichert ist. Wird in Schritt 340 festgestellt, dass die Abweichung der Ist-Drehzahl von der Soll-Drehzahl innerhalb vorgebbarer, im Speicher 199 abgelegter, Grenzen liegt, so wird der Algorithmus beendet bzw. neu gestartet. Wird jedoch festgestellt, dass die Abweichung über der vorgebbaren Grenze liegt, so werden im Schritt 360 Maßnahmen eingeleitet, die zu einer Anpassung der Ist-Drehzahl an die Soll-Drehzahl führt. So kann beispielsweise vorgesehen sein, weitere Steuersignale für die Pumpe zu erzeugen, die den Steuersignalen der Steuerung überlagert werden und zu einer Anpassung der Drehzahl der Pumpe führen. In einem weiteren Ausführungsbeispiel kann jedoch auch vorgesehen sein, dass die Regelung im Schritt 360 entsprechende Änderungsgrößen an die Steuerung weiterleitet, so dass die Steuerung mittels neuer Steuersignale die Ist-Drehzahl an die Soll-Drehzahl angleicht.

In der Figur 4 ist ein Blockschaltbild eines möglichen Aufbaus eines Ausführungsbeispiels dargestellt. Ein Steuergerät 440 erhält von einem oder mehreren entsprechenden Vorrichtungen 460 Pumpanforderungen. Diese Pumpanforderungen können dabei auf unterschiedliche Arten ermittelt werden. So kann beispielsweise in Abhängigkeit von einer Bremsanforderung durch den Fahrer oder durch ein automatisches Bremssteuersystem ein Solldruck in der Bremsanlage bzw. in den Radbremsen bestimmt werden, der durch die Pumpe 400 erzeugt werden soll. Im Steuergerät 440 kann darüber hinaus vorgesehen sein, dass mittels geeigneter Sensoren die Druckverhältnisse in der Bremsanlage erfasst und bei der Bestimmung der Steuersignale für die Pumpe 400 berücksichtigt werden. Weiterhin können sowohl die physikalischen Eigenschaften der Pumpe 400 als auch die physikalischen Eigenschaften des Mediums bei der Erzeugung der Steuersignale berücksichtigt werden. Der Solldruck bzw. der Solldruckverlauf der Pumpe wird anschließend durch das Steuergerät 400 in eine Solldrehzahl der Pumpe 400 umgewandelt, woraus sich entsprechende Steuersignale des Steuergeräts 440 für die Pumpe 400 ergeben. Die Einstellung des gewünschten Drucks bzw. des Druckverlaufs und des damit verbundenen Durchfluss des Mediums durch die Pumpe 400 erfolgt dabei üblicherweise durch eine Steuerung der Drehzahl der Pumpe 400. Dabei wird die Drehzahl typischerweise über eine getaktete Ansteuerung der Pumpe 400 gesteuert. Mit Hilfe einer entsprechenden Vorrichtung lässt sich die aktuelle Drehzahl 410 während des Betriebs der Pumpe 400 bestimmen. Wie bereits erwähnt, kann eine derartige Erfassung durch einen Drehzahlsensor direkt an der Pumpe 400 realisiert werden. Alternativ zu einem Sensor kann jedoch auch aus der Erfassung der Nachlaufspannung ein Maß für die aktuelle Drehzahl 410 ermittelt werden. Der aktuelle Wert der Drehzahl 410 wird anschließend, wie in Figur 4 beschrieben, einem Regler 420 zugeführt, der die so ermittelte Ist-Größe mit der Sollgröße, der Solldrehzahl 432 vergleicht. Dabei kann die Solldrehzahl 432 durch eine weitere Vorrichtung 430 oder durch das Steuergerät 440 bestimmt worden sein. Anhand des Vergleichs der aktuellen Drehzahl 410 mit der Solldrehzahl 432 kann der Regler 420 eine Störung der aktuellen Pumpleistung gegenüber der im Steuergerät 440 prognostizierten Pumpleistung erkennen. Wird eine derartige Störung erkannt, kann der Regler 440 eigenständig Regel- bzw. Steuersignale erzeugen und der Steuerung überlagern. Dieses Vorgehen soll mit der gestrichelten Verbindung 426 dargestellt werden. Es ist jedoch auch möglich, dass der Regler 440 entsprechende Änderungsanforderungen an das Steuergerät 440 über die Verbindung 424 weiterleitet, so dass die Steuerung im Steuergerät 440 auf die Störung der aktuellen Pumpleistung reagieren kann. Somit wird bei der weiteren Bestimmung der Steuersignale im Steuergerät 440 die Störung, die durch den Regler 420 erkannt wurde berücksichtigt.

Neben der Verwendung der aktuellen Drehzahl 410 der Pumpe 400 im Regler 420, kann die Drehzahl 410 auch für weitere Anwendungen 480 genutzt werden. So ist beispielsweise denkbar, die aktuelle Drehzahl 410 zur Ermittlung der Viskosität des Mediums heranzuziehen.

Eine Ausgestaltung einer Pumpenregelung, wie sie in Figur 4 beschrieben ist, hat den Vorteil, dass bei einem Defekt bzw. einem Ausfall der Vorrichtung zur Erfassung der aktuellen Drehzahl 410 oder des Regler 420, die Pumpe weiterhin über das Steuergerät 440 gesteuert werden kann, auch wenn die Überwachung durch den Regler 420 nicht mehr möglich.

In der Figur 5 ist ein weiteres Ausführungsbeispiel dargestellt, welches die Steuerung im Steuergerät 110 bzw. 440 beschreibt. Dabei wird ausgehend von einem bestimmten Solldruckverlauf der Pumpe 500 sowie den physikalischen Eigenschaften der Pumpe bzw. der Bremsanlage 510 eine Berechnung des Solldurchflusses in Block 520 ermöglicht. Dabei können die physikalischen Eigenschaften der Pumpe in einem separaten Speicher 199 abgelegt sein, wohingegen die physikalischen Eigenschaften der Bremsanlage wie beispielsweise die Temperatur oder die Viskosität des Mediums bzw. die Druckverhältnisse in der Bremsanlage durch entsprechende Sensoren erfasst werden. In Block 520 wird dann abhängig von dem ermittelten Solldurchfluss und den physikalischen Eigenschaften des Blocks 510 eine Trajektorienplanung für das geplante Pumpenverhalten durchgeführt. Ausgehend von dieser Trajektorienplanung lässt sich zusammen mit den physikalischen Eigenschaften der Pumpe in Block 540 eine Lastcharakteristik der Pumpe entwickeln. Aus der Lastcharakteristik der Pumpe und der aus der Trajektorienplanung abgeleiteten Solldrehzahl kann im Block 550 ein Modell entwickelt werden, welches den elektrischen Antrieb beschreibt. Wird in einem weiteren Schritt dieses Modell invertiert, so ergeben sich daraus die notwendigen Steuersignale zur Erreichung des angeforderten Solldrucksverlaufs. Die so erzeugten Steuersignale können dann an die Pumpe 560 weitergegeben werden.

Neben der beschriebenen Verwendung der Erfindung in einer Bremsanlage eines Fahrzeugs kann die Steuerung- bzw. Regelung einer Pumpe auch in anderen hydraulischen Systemen eingesetzt werden. Weiterhin ist denkbar, mittels der vorgeschlagenen Erfindung eine Ölpumpe in einem Fahrzeug zu steuern bzw. zu regeln.

## Patentansprüche

1. Verfahren zum Betrieb einer Pumpe, insbesondere einer Pumpe in der Bremsanlage eines Fahrzeug, mit einer Steuerung (110, 440) und einer Regelung (110, 420),
wobei in Abhängigkeit von einem vorgebbaren Solldrehzahlverlauf erste Steuerparameter zur Steuerung der Pumpe (180, 400) gebildet werden,
wobei die Regelung (110, 420)
- die Drehzahl der Pumpe (180, 400) erfasst und mit dem vorgegebenen Solldrehzahlverlauf vergleicht, und
- in Abhängigkeit vom durchgeführten Vergleich zusätzliche zweite Steuerparameter erzeugt, die während des Betriebs den ersten Steuerparametern überlagert werden,
wobei die ersten Steuerparameter vor der Ansteuerung der Pumpe (180, 400) mit den ersten Steuerparametern gebildet werden,
wobei insbesondere vorgesehen ist, dass die Bildung der ersten Steuerparameter durch eine Bedarfsanfrage an die Pumpe (180, 400) gestartet wird.

2. Verfahren nach Anspruch 1, **dadurch gekennzeichnet, dass** bei der Bildung der ersten Steuerparameter der Lastverlauf der Pumpe (180, 400) berücksichtigt wird, wobei insbesondere vorgesehen ist, dass der Lastverlauf durch
- die Konstruktionsparameter der Pumpe (180, 400), und/oder
- die Stoffeigenschaften des gepumpten Mediums, und/oder
- die an der Pumpe (180, 400) anliegenden Drücke
vorgegeben wird.

3. Verfahren nach Anspruch 1, **dadurch gekennzeichnet, dass** der Solldrehzahlverlauf in Abhängigkeit einer Bedarfsanfrage vorgebbar ist, wobei insbesondere vorgesehen ist, dass die Bedarfsanfrage eine Bremsanforderung
- des Fahrers und/oder
- eines automatischen Fahrzeugssystems
repräsentiert.

4. Verfahren nach Anspruch 1, **dadurch gekennzeichnet, dass** die ersten Steuerparameter das zeitliche Verhalten der an die Pumpe (180, 400) angelegten Spannung beschreiben, wobei insbesondere vorgesehen ist, dass die Steuerung des Pumpe (180, 400) mittels der ersten Steuerparameter getaktet abläuft.

5. Verfahren nach Anspruch 1, **dadurch gekennzeichnet, dass** die Drehzahl der Pumpe (180, 400)
- durch einen Drehzahlsensor und/oder
- in Abhängigkeit der Nachlaufspannung
erfasst wird, wobei insbesondere vorgesehen ist, dass die Drehzahl bzw. die Nachlaufspannung innerhalb einer ungetakteten Pulspause einer getakteten Ansteuerung der Pumpe (180, 400) erfasst wird.

6. Verfahren nach Anspruch 1, **dadurch gekennzeichnet, dass** die Regelung (110, 420)
- eine Abweichung des insbesondere zeitlichen aktuellen Drehzahlverlaufs vom Solldrehzahlverlauf erkennt und
- zur Modifikation des aktuellen Drehzahlverlaufs in Abhängigkeit von der Abweichung zweite Steuerparameter bildet, wobei die Verknüpfung der ersten und der zweiten Steuerparameter den aktuellen Drehzahlverlauf an den Solldrehzahlverlauf angleicht.

7. Vorrichtung zum Betrieb einer Pumpe, insbesondere einer Pumpe in der Bremsanlage eines Fahrzeug, mit einer Steuerung (110, 440) und einer Regelung (110, 420),
wobei wenigstens ein erstes Mittel (110, 440) zur Steuerung vorgesehen ist, welches in Abhängigkeit von einem vorgebbaren Solldrehzahlverlauf erste Steuerparameter zur Steuerung der Pumpe (180, 400) bildet,
und wenigstens ein zweites Mittel (110, 420) zur Regelung vorgesehen ist, welches
- die Drehzahl der Pumpe (180, 400) erfasst und mit dem vorgegebenen Solldrehzahlverlauf vergleicht, und
- in Abhängigkeit vom durchgeführten Vergleich zusätzliche zweite Steuerparameter erzeugt, die während des Betriebs den ersten Steuerparametern überlagert werden,
wobei das erste Mittel (110, 440) die ersten Steuerparameter vor der Ansteuerung der Pumpe (180, 400) mit den ersten Steuerparametern bildet,
wobei insbesondere vorgesehen ist, dass die Bildung der Steuerparameter durch eine Bedarfsanfrage an die Pumpe (180, 400) gestartet wird.

8. Vorrichtung nach Anspruch 7, **dadurch gekennzeichnet, dass** das erste Mittel bei der Bildung der ersten Steuerparameter den Lastverlauf der Pumpe (180, 400) berücksichtigt, wobei insbesondere vorgesehen ist, dass der Lastverlauf durch
- die Konstruktionsparameter der Pumpe (180, 400), und/oder
- die Stofreigenschaften des gepumpten Mediums, und/oder
vorgegeben wird.

9. Vorrichtung nach Anspruch 7, **dadurch gekennzeichnet, dass** das erste Mittel (110, 440) die Pumpe (180, 400) mittels der ersten Steuerparameter getaktet ansteuert.

10. Vorrichtung nach Anspruch 7, **dadurch gekennzeichnet, dass** die Drehzahl der Pumpe (180, 400) durch ein drittes Mittel erfasst wird, wobei vorgesehen ist, dass das dritte Mittel ein Drehzahlsensor und/oder eine Erfassung der Nachlaufspannung der Pumpe (180, 400) repräsentiert.

11. Vorrichtung nach Anspruch 7, **dadurch gekennzeichnet, dass** das zweite Mittel (110, 420)
- eine Abweichung des insbesondere zeitlichen aktuellen Drehzahlverlaufs vom Solldrehzahlverlauf erkennt und
- zur Modifikation des aktuellen Drehzahlverlaufs zweite Steuerparameter bildet, wobei die Verknüpfung der ersten und der zweiten Steuerparameter den aktuellen Drehzahlverlauf an den Solldrehzahlverlauf angleicht.

## Claims

1. Method for operating a pump, in particular a pump in the brake system of a vehicle, having an open-loop controller (110, 440) and a closed-loop controller (110, 420),
wherein first open-loop control parameters for performing open-loop control of the pump (180, 400) are formed as a function of a predefinable setpoint rotational speed profile,
wherein the closed-loop controller (110, 420)
- detects the rotational speed of the pump (180, 400) and compares it with the predefined setpoint rotational speed profile, and
- generates additional second open-loop control parameters as a function of the comparison which is carried out, said open-loop control parameters being superimposed on the first open-loop control parameters during operation,
wherein the first open-loop control parameters are formed before the actuation of the pump (180, 400) with the first open-loop control parameters,
wherein there is provision that the formation of the first open-loop control parameters is started by a demand request to the pump (180, 400).

2. Method according to Claim 1, **characterized in that** during the formation of the first open-loop control parameters the load profile of the pump (180, 400) is taken into account, wherein there is, in particular, provision that the load profile is predefined by
- the design parameters of the pump (180, 400),
and/or
- the material properties of the pumped medium,
and/or
- the pressures present at the pump (180, 400).

3. Method according to Claim 1, **characterized in that** the setpoint rotational speed profile can be predefined as a function of a demand request, wherein there is in particular provision that the demand request represents a braking request
- of the driver and/or
- of an automatic vehicle system.

4. Method according to Claim 1, **characterized in that** the first open-loop control parameters describe the timing behaviour of the voltage applied to the pump (180, 400) wherein there is in particular provision that the open-loop control of the pump (180, 400) takes place in a clocked fashion by means of the first open-loop control parameters.

5. Method according to Claim 1, **characterized in that** the rotational speed of the pump (180, 400) is detected
- by means of a rotational speed sensor and/or
- as a function of the run-on voltage,
wherein there is in particular provision that the rotational speed and/or the run-on voltage are/is detected within one unclocked inter-pulse period of a clocked actuation process of the pump (180, 400).

6. Method according to Claim 1, **characterized in that** the closed-loop control (110, 420)
- detects a deviation of the, in particular, chronologically current rotational speed profile from the setpoint rotational speed profile, and
- forms second open-loop control parameters for modifying the current rotational speed profile as a function of the deviation, wherein the logical linking of the first and second open-loop control parameters approximates the current rotational speed profile to the setpoint rotational speed profile.

7. Device for operating a pump, in particular a pump in the brake system of a vehicle, having an open-loop controller (110, 440) and a closed-loop controller (110, 420),
wherein at least a first means (110, 440) for performing open-loop control is provided, which means (110, 440) forms first open-loop control parameters for performing open-loop control of the pump (180, 400) as a function of a predefinable setpoint rotational speed profile,
and at least a second means (110, 420) for performing closed-loop control is provided, which means (110, 420)
- detects the rotational speed of the pump (180, 400) and compares it with the predefined setpoint rotational speed profile, and
- generates additional second open-loop control parameters as a function of the comparison which is carried out, said second open-loop control parameters being superimposed on the first open-loop control parameters during operation, **characterized in that** the first means (110, 440) forms the first open-loop control parameters before the actuation of the pump (180, 400) with the first open-loop control parameters,
wherein there is provision that the formation of the control parameters is started by a demand request to the pump (180, 400).

8. Device according to Claim 7, **characterized in that** during the formation of the first open-loop control parameters the first means takes into account the load profile of the pump (180, 400), wherein there is, in particular, provision that the load profile is predefined by
- the design parameters of the pump (180, 400),
and/or
- the material properties of the pumped medium,
and/or
- the pressures present at the pump (180, 400).

9. Device according to Claim 7, **characterized in that** the first means (110, 440) actuates the pump (180, 400) in a clocked fashion by means of the first open-loop control parameters.

10. Device according to Claim 7, **characterized in that** the rotational speed of the pump (180, 400) is detected by a third means, wherein there is provision that the third means represents a rotational speed sensor and/or a detection of the run-on voltage of the pump (180, 400).

11. Device according to Claim 7, **characterized in that** the second means (110, 420)
- detects a deviation of the, in particular, chronologically current rotational speed profile from the setpoint rotational speed profile, and
- forms second open-loop control parameters for modifying the current rotational speed profile, wherein the logic linking of the first and second open-loop control parameters approximates the current rotational speed profile to the setpoint rotational speed profile.

## Revendications

1. Procédé pour faire fonctionner une pompe, en particulier une pompe dans l'installation de freinage d'un véhicule, comprenant une commande (110, 440) et une régulation (110, 420),
des premiers paramètres de commande étant formés en fonction d'une courbe de vitesse de rotation de consigne prédéfinissable pour la commande de la pompe (180, 400),
la régulation (110, 420)
- détectant la vitesse de rotation de la pompe (180, 400) et la comparant à la courbe prédéfinie de vitesse de rotation de consigne, et
- produisant, en fonction de la comparaison effectuée, des deuxièmes paramètres de commande supplémentaires qui sont superposés pendant le fonctionnement aux premiers paramètres de commande,
les premiers paramètres de commande étant formés avant la commande de la pompe (180, 400) avec les premiers paramètres de commande,
la formation des premiers paramètres de commande étant prévue pour être commencée par une demande à la pompe (180, 400) concernant les besoins.

2. Procédé selon la revendication 1, **caractérisé en ce que** lors de la formation des premiers paramètres de commande, la courbe de charge de la pompe (180, 400) est prise en compte, et il est notamment prévu que la courbe de charge soit prédéfinie
- par les paramètres de construction de la pompe (180, 400), et/ou
- par les propriétés des matériaux du milieu pompé, et/ou
- par les pressions appliquées à la pompe (180, 400).

3. Procédé selon la revendication 1, **caractérisé en ce que** la courbe de vitesse de rotation de consigne peut être prédéfinie en fonction d'une demande concernant les besoins, et il est notamment prévu que la demande concernant les besoins représente une demande de freinage
- du conducteur et/ou
- d'un système automatique du véhicule.

4. Procédé selon la revendication 1, **caractérisé en ce que** les premiers paramètres de commande décrivent le comportement dans le temps de la tension appliquée à la pompe (180, 400), et il est notamment prévu que la commande de la pompe (180, 400) se déroule de manière cadencée au moyen des premiers paramètres de commande.

5. Procédé selon la revendication 1, **caractérisé en ce que** la vitesse de rotation de la pompe (180, 400) est détectée
- par un capteur de vitesse de rotation et/ou
- en fonction de la tension d'alimentation,
et il est notamment prévu que la vitesse de rotation ou la tension d'alimentation soit détectée en l'espace d'une pause d'impulsion non cadencée d'une commande cadencée de la pompe (180, 400).

6. Procédé selon la revendication 1, **caractérisé en ce que** la régulation (110, 420)
- détecte un écart de la courbe de vitesse de rotation notamment actuelle par rapport à la courbe de vitesse de rotation de consigne et
- forme, pour modifier l'allure actuelle de la vitesse de rotation en fonction de l'écart, des deuxièmes paramètres de commande, la liaison entre les premiers et les deuxièmes paramètres de commande ajustant la courbe actuelle de vitesse de rotation à la vitesse de rotation de consigne.

7. Dispositif pour faire fonctionner une pompe, en particulier une pompe dans l'installation de freinage d'un véhicule, comprenant une commande (110, 440) et une régulation (110, 420), au moins un premier moyen (110, 440) étant prévu pour la commande, lequel forme, en fonction d'une courbe de vitesse de rotation de consigne prédéfinissable, des premiers paramètres de commande pour la commande de la pompe (180, 400), et au moins un deuxième moyen (110, 420) étant prévu pour la régulation, lequel
- détecte la vitesse de rotation de la pompe (180, 400) et la compare à la courbe prédéfinie de vitesse de rotation de consigne, et
- produit, en fonction de la comparaison effectuée, des deuxièmes paramètres de commande supplémentaires, qui sont superposés aux premiers paramètres de commande pendant le fonctionnement,
**caractérisé en ce que** le premier moyen (110, 440) forme les premiers paramètres de commande avant la commande de la pompe (180, 400) avec les premiers paramètres de commande,
et il est prévu que la formation des paramètres de commande soit commencée par une demande à la pompe (180, 400) concernant les besoins.

8. Dispositif selon la revendication 7, **caractérisé en ce que** le premier moyen, lors de la formation des premiers paramètres de commande, tient compte de la courbe de charge de la pompe (180, 400), et il est prévu notamment que la courbe de charge soit prédéfinie
- par les paramètres de construction de la pompe (180, 400), et/ou
- par les propriétés des matériaux du milieu pompé, et/ou
- par les pressions appliquées à la pompe (180, 400).

9. Dispositif selon la revendication 7, **caractérisé en ce que** le premier moyen (110, 440) commande la pompe (180, 400) de manière cadencée au moyen des premiers paramètres de commande.

10. Dispositif selon la revendication 7, **caractérisé en ce que** la vitesse de rotation de la pompe (180, 400) est détectée par un troisième moyen, et il est prévu que le troisième moyen représente un capteur de vitesse de rotation et/ou une détection de la tension d'alimentation de la pompe (180, 400).

11. Dispositif selon la revendication 7, **caractérisé en ce que** le deuxième moyen (110, 420)
- détecte un écart de la courbe de vitesse de rotation notamment actuelle par rapport à la courbe de vitesse de rotation de consigne et
- forme, pour modifier la courbe de vitesse de rotation actuelle, des deuxièmes paramètres de commande, la liaison des premiers et des deuxièmes paramètres de commande ajustant la courbe de vitesse de rotation actuelle à la courbe de vitesse de rotation de consigne.
